# EUROPEAN PATENT APPLICATION

(11) **EP 3 482 890 A1**
(43) Date of publication of application: **15.05.2019**
(21) Application number: 16908146.0
(22) Date of filing: 06.07.2016
(51) Int. Cl.: B25J 19/04, B23P 19/00

(54) **IMAGING DEVICE AND IMAGING SYSTEM**

(71) Applicant: Fuji Corporation, Chiryu-shi, Aichi 472-8686 (JP)
(72) Inventor: OKAMOTO, Miyuki, Chiryu, Aichi (JP); OISHI, Nobuo, Chiryu Aichi (JP); JINDO, Takahiro, Chiryu Aichi (JP); TSUCHIDA, Kosuke, Chiryu Aichi (JP); NAGASAKA, Nobuo, Chiryu Aichi (JP)
(74) Representative: Grünecker Patent- und Rechtsanwälte PartG mbB
(86) International application number: PCT/JP2016/069982
(87) International publication number: WO 2018/008102

(57) **Abstract**

In work execution system 100, imaging device 60 receives encoder signals of first to fourth encoders 41 to 44, and performs imaging-related processing based on the received multiple encoder signals. Work execution system 100 may include imaging device 60, and control device 80 that receives the multiple encoder signals in parallel with imaging device 60, and controls first to fourth motors 31 to 34 based on the received multiple encoder signals.

## Description

### Technical Field

The present invention relates to an imaging device and an imaging system.

### Background Art

Conventionally, there has been known a device for capturing an image based on a signal from an encoder of a motor. For example, Patent Literature 1 describes a component recognition apparatus including a control device for controlling a motor and receiving a pulse signal of an encoder, and a camera for imaging an image. In this apparatus, when the count number of the pulse signal of the encoder reaches a predetermined reference number, the control device inputs an image-capturing trigger to the camera to cause the camera to capture an image.

### Patent Literature

Patent Literature 1: JP-A-2009-170517

### Summary of Invention

### Technical Problem

However, in the apparatus described in Patent Literature 1, since the control device of the motor inputs the pulse signal of the encoder to the camera to capture an image, there are cases where image capturing cannot be performed at an appropriate timing, for example, when the delay time from the time when the count number of the pulse signal reaches the reference number to the time when image capturing is performed is large.

The present invention has been made to solve the above-mentioned problem, and has as its main object to perform imaging-related processing at a more appropriate timing.

### Solution to Problem

The present invention employs the following means in order to achieve the main object described above.

The imaging device of the present invention includes an imaging section configured to capture an image, a determination section configured to receive an encoder signal from each motor among a multiple of motors, being included in a multi-axis robot, and determine whether a predetermined processing condition is satisfied based on the received multiple encoder signals, and an imaging control section configured to perform predetermined imaging-related processing related to image capturing by the imaging section when the determination section determines that the processing condition is satisfied.

### Advantageous Effects of Invention

In this imaging device, the imaging device receives encoder signals, and performs imaging-related processing based on the multiple received encoder signals. Therefore, compared with a case, for example, where the imaging device receives the execution command of the imaging-related processing from a control device of the motor that received the encoder signal, a delay time can be reduced, and the imaging-related processing can be performed at a more appropriate timing.

### Brief Description of Drawings

FIG. 1 is a schematic view of work execution system 100.
FIG. 2 is a schematic view of robot arm 1.
FIG. 3 is a block diagram showing an electrical connection relationship in work execution system 100.
FIG. 4 illustrates the flow of processing of control device 80 and imaging device 60.
FIG. 5 is a block diagram showing an electrical connection relationship in work execution system 100A of a different embodiment.

### Description of Embodiments

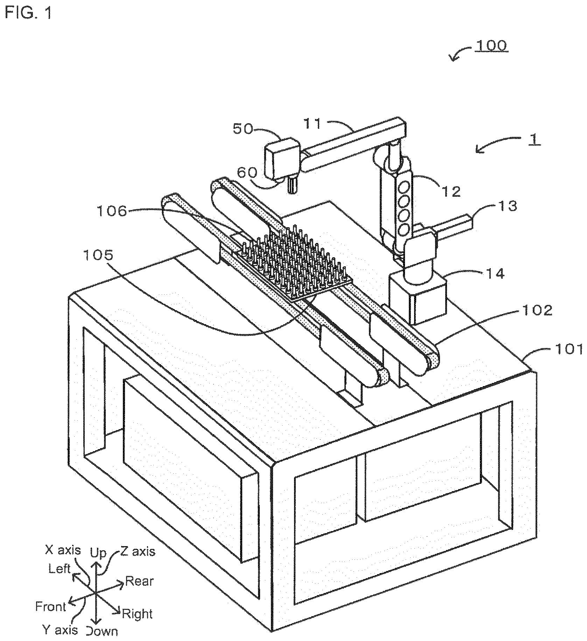

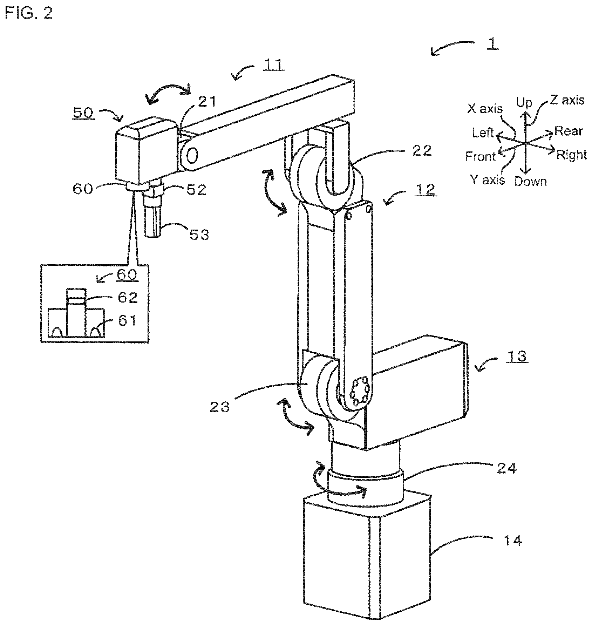

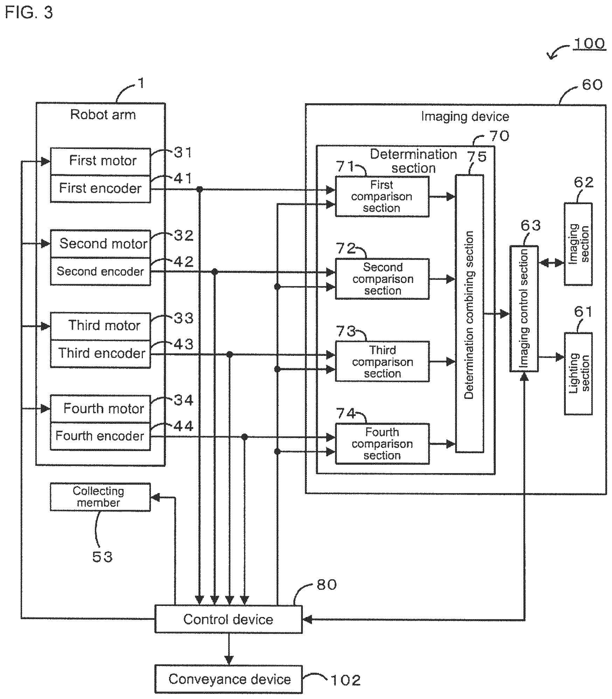

Embodiments of the present invention are described below with reference to the drawings. FIG. 1 is a schematic view of work execution system 100 including an example of an imaging system of the present invention. FIG. 2 is a schematic view of robot arm 1. FIG. 3 is a block diagram showing an electrical connection relationship in work execution system 100. The left-right direction (X-axis), the front-rear direction (Y-axis), and the vertical direction (Z-axis) of work execution system 100 are as shown in FIG. 1. Although robot arm 1 is movable in all directions and therefore has no specific direction that is fixed, for convenience of description, the directions shown in FIG. 2 will be described as a left-right direction (X axis), a front-rear direction (Y axis), and a vertical direction (Z axis) with respect to robot arm 1.

Work execution system 100 is configured as a device that performs multiple predetermined works on an object (workpiece) as a work target. Work execution system 100 includes robot arm 1, imaging device 60 attached to robot arm 1, base 101 on which robot arm 1 is disposed, conveyance device 102 that conveys bolts 106, which are workpieces in this embodiment, and pallet 105 on which bolts 106 are placed, and control device 80 (see FIG. 3) that controls the entire device. In the present embodiment, one robot arm 1 is disposed behind conveyance device 102 as shown in FIG. 1, but work execution system 100 may further include one or more robot arms 1 disposed at at least one of the front side or the rear side of conveyance device 102.

Robot arm 1 is configured as a device that performs a predetermined work on a workpiece. The workpiece is not particularly limited, and examples thereof include various components such as mechanical components, electrical components, electronic components, and chemical components, as well as food, and biotechnology and biological related articles. Examples of the predetermined work include processing of collection, movement, and disposal from an initial position to a predetermined position, and processing of performing deformation, connection, and joining with respect to a predetermined portion. In the present embodiment, robot arm 1 performs at least processing of collecting and moving bolt 106, which is a workpiece, from pallet 105.

Robot arm 1 is a multi-axis robot configured as a vertical multi-joint robot, and includes first arm 11, second arm 12, third support section 13, pedestal 14, and distal end 50. Robot arm 1 further includes first to fourth rotation mechanisms 21 to 24 as multiple (four in this embodiment) rotation mechanisms, multiple (four in this embodiment) first to fourth motors 31 to 34, and multiple (four in this embodiment) first to fourth encoders 41 to 44 (see FIG. 3).

As shown in FIG. 2, first arm 11 is a longitudinal member in which distal end 50, which is a work portion for performing work on a workpiece, is disposed. First arm 11 is connected to distal end 50 via first rotation mechanism 21 which is disposed at an end of the first arm opposite second arm 12 and has a rotation shaft and a gear mechanism. First motor 31 and first encoder 41 are accommodated in first arm 11. First motor 31 outputs a rotational driving force to rotate the rotation shaft of first rotation mechanism 21. Therefore, distal end 50 is rotatably disposed with respect to first arm 11. First encoder 41 is attached to first motor 31, and outputs an encoder signal which is a pulse that can be used to detect the rotational position of first motor 31.

Second arm 12 is a longitudinal member to which first arm 11 is connected via second rotation mechanism 22 having a rotation shaft and a gear mechanism. Second motor 32 and second encoder 42 are accommodated in second arm 12. Second motor 32 outputs a rotational driving force to rotate the rotating shaft of second rotating mechanism 22. Therefore, first arm 11 is rotatably disposed with respect to second arm 12. Second encoder 42 is attached to second motor 32, and outputs an encoder signal which is a pulse that can be used to detect the rotational position of second motor 32.

Third support section 13 is a member to which second arm 12 is connected via third rotation mechanism 23 having a rotation shaft and a gear mechanism. Third motor 33 and third encoder 43 are accommodated in third support section 13. Third motor 33 outputs a rotational driving force to rotate the rotation shaft of third rotation mechanism 23. Therefore, second arm 12 is rotatably disposed with respect to third support section 13. Third encoder 43 is attached to third motor 33, and outputs an encoder signal which is a pulse that can be used to detect the rotational position of third motor 33.

Pedestal 14 supports third support section 13 via fourth rotation mechanism 24 including a support shaft formed in the vertical direction. Fourth motor 34 and fourth encoder 44 are accommodated in pedestal 14. Fourth motor 34 outputs a rotational driving force to rotate the support shaft of fourth rotation mechanism 24. Therefore, third support section 13 is rotatably disposed with respect to pedestal 14. Fourth encoder 44 is attached to fourth motor 34, and outputs an encoder signal which is a pulse that can be used to detect the rotational position of fourth motor 34.

First to fourth encoders 41 to 44 are configured as transparent optical encoders. First to fourth encoders 41 to 44 are incremental encoders in which two types of pulses, an A phase pulse and a B phase pulse, are output as encoder signals. However, the configuration is not limited to this, and for example, first to fourth encoders 41 to 44 may be reflective optical encoders or absolute encoders capable of detecting the absolute value of the rotation position.

Distal end 50 performs a predetermined work on a workpiece. As shown in FIG. 2, distal end 50 includes mounting section 52, collecting member 53, and imaging device 60. Mounting section 52 is disposed on the lower surface of the main body of distal end 50. Collecting member 53 is mounted on the lower surface of mounting section 52. Collecting member 53 has, for example, multiple claws and is configured as a mechanical chuck for grasping and collecting an article. Collecting member 53 may be, for example, a suction nozzle that uses pressure to pick up and hold an article. It should be noted that collecting member 53 is detachable from the mounting section 52, and in addition to collecting member 53, various members for performing a predetermined work on a workpiece can be mounted.

Imaging device 60 includes lighting section 61, imaging section 62, imaging control section 63, and determination section 70 (see FIG. 3). Lighting section 61 is, for example, illumination disposed in a circular shape on the outer periphery of imaging section 62, and can shine light on a workpiece and the periphery of the workpiece. Imaging section 62 is a unit capable of capturing an image, and captures an image of a workpiece and the periphery of the workpiece by capturing an image of the lower portion in FIG. 2. Imaging section 62 includes, for example, an optical system such as a lens, an imaging element that is an image sensor for converting an image of a subject into an electrical signal by photoelectric conversion, and a signal processing section for generating image data based on an electrical signal received from the imaging element. Although not particularly limited to this, in the present embodiment, imaging device 60 is a device capable of high-speed imaging at a frame rate of 1,000 fps (frame/second) or more. The frame rate of imaging device 60 may be, for example, 2,000 fps (frame/second) or less.

Determination section 70 is a section that performs determination based on the encoder signals from first to fourth encoders 41 to 44, and includes first to fourth comparison sections 71 to 74 and determination combining section 75, as shown in FIG. 3. First to fourth comparison sections 71 to 74 respectively correspond to first to fourth encoders 41 to 44 in a one-to-one relationship, and the encoder signal from the corresponding one of first to fourth encoders 41 to 44 is input to the corresponding one of first to fourth comparison sections 71 to 74 by, for example, serial communication. First to fourth comparison sections 71 to 74 are each input with a predetermined processing condition from control device 80 by, for example, serial communication. First comparison section 71 includes a counter for counting the number of pulses of the encoder signal received from first encoder 41, a set value storage section for storing a predetermined set value, which is a part of the processing condition, received from control device 80 and a coincidence determination section for determining whether the count value by the counter matches the set value. When the count value matches the set value, the coincidence determination section outputs a coincidence determination signal indicating that the count value matches the set value to determination combining section 75. Second to fourth comparison sections 72 to 74 have the same configuration as that of the first comparison section, and each compare the count value of the number of pulses of the received encoder signal with the set value received from control device 80, and output a coincidence determination signal to determination combining section 75 when both of them coincide with each other. Determination combining section 75 is connected to first to fourth comparison sections 71 to 74, and determines whether the processing condition is satisfied based on whether the coincidence determination signal is received from each of first to fourth comparison sections 71 to 74. That is, determining combining section 75 is configured as, for example, an AND circuit, and when the coincidence determination signal is received from each of first to fourth comparison sections 71 to 74, a signal representing that the processing condition is satisfied is output to imaging control section 63. On the other hand, when the coincidence determination signal is not received from one or more of first to fourth comparison sections 71 to 74, determination combining section 75 does not output a signal indicating that the processing condition is satisfied to imaging control section 63.

Imaging control section 63 controls overall imaging device 60. Imaging control section 63 outputs a control signal to lighting section 61 to control the light emitted from lighting section 61, and outputs a control signal to imaging section 62 to perform image capturing. Imaging control section 63 receives an image generated by imaging section 62 and outputs the image to control device 80, or receives a command from control device 80.

In the present embodiment, the signal processing sections included in determination section 70 and imaging section 62, and imaging control section 63 are each configured by a hardware circuit as a dedicated processing circuit. However, one or more of these sections may be realized by software such as a program executed on the CPU of imaging device 60.

Control device 80 is configured as a microprocessor centered on a CPU, and controls the entire device of work execution system 100. Control device 80 outputs signals to first to fourth motors 31 to 34, collecting member 53, imaging control section 63, and conveyance device 102. Control device 80 outputs the above-described set values to respective first to fourth comparison sections 71 to 74. Encoder signals from first to fourth encoders 41 to 44 are input to control device 80 by, for example, serial communication. As shown in FIG. 3, encoder signals from first to fourth encoders 41 to 44 are input in parallel to imaging device 60 and control device 80. Here, in the present embodiment, the position of distal end 50 of robot arm 1, that is, the coordinate, is represented by the XYZ coordinate representing the positions in the respective directions of the XYZ axes shown in FIG. 1. Control device 80 stores position correspondence information (e.g., a conversion formula or a table) representing the correspondence relationship between the coordinate of distal end 50 and the rotational positions of first to fourth motors 31 to 34 in the storage section. Based on the position correspondence information and the encoder signals from first to fourth encoders 41 to 44, control device 80 detects the current coordinate of distal end 50, and derives the respective rotation amounts of first to fourth motors 31 to 34 required to move distal end 50 from the current coordinate to the target coordinate. Then, control device 80 outputs control signals to respective first to fourth motors 31 to 34 based on the respective derived rotation amounts, controlling the position of distal end 50.

As shown in FIG. 1, base 101 fixes robot arm 1 and conveyance device 102. On base 101, conveyance device 102 is disposed at the center thereof, and robot arm 1 is fixed to the rear of conveyance device 102.

Conveyance device 102 is a unit for, for example, carrying in, conveying, and carrying out a workpiece. Conveyance device 102 has a pair of conveyor belts that are provided with a space therebetween in the front and rear direction and spanned in the left-right direction in FIG. 1. In the present embodiment, flat-shaped pallet 105, on which workpieces, that is, multiple bolts 106 are mounted, is conveyed by the conveyor belts.

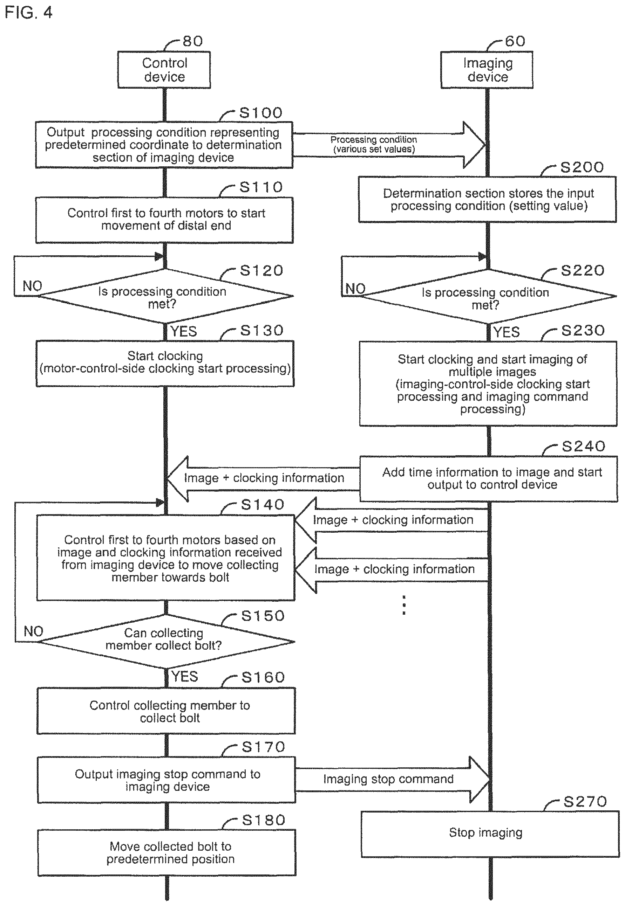

Next, the operation of work execution system 100 of the present embodiment configured as described above, in particular, the processing of collecting and moving bolt 106, on pallet 105 being conveyed, by collecting member 53 with the imaging by imaging device 60 will be described. FIG. 4 illustrates the flow of processing of control device 80 and imaging device 60. For example, when an operator operates an operation section (not shown) to instruct the start of the work, control device 80 drives conveyance device 102 before starting the processing of FIG. 4. As a result, bolt 106 on which multiple bolts 106 are arranged is carried in from the upstream side of conveyance device 102, and is conveyed in the conveyance direction (left-right direction).

When conveyance device 102 is driven, control device 80 outputs the predetermined processing condition to determination section 70 of imaging device 60 (step S100). Here, in the present embodiment, the processing condition can be considered as a condition in which the distal end 50 of robot arm 1 resides at a predetermined coordinate. Here, the predetermined coordinate is a coordinate suitable for starting the imaging by imaging section 62 of imaging device 60, and is determined in advance, for example, as a coordinate of a height at which imaging section 62 approaches bolt 106 to some extent directly above conveyance device 102 in front of robot arm 1. In outputting the processing condition to determination section 70, control device 80 derives set values that are values obtained by converting the processing condition into the respective count values of the encoder signals of first to fourth encoders 41 to 44, and outputs the set values to respective first to fourth comparison sections 71 to 74. Specifically, on the basis of the above-described position correspondence information, the numbers of pulses of the encoder signals generated until distal end 50 moves from the current coordinate to the predetermined coordinate is derived for respective first to fourth encoders 41 to 44 with reference to the current rotational positions of respective first to fourth motors 31 to 34 corresponding to the current coordinates of distal end 50, and the derived values are set to set values corresponding to respective first to fourth encoders 41 to 44. The derived set values are output to first to fourth comparison sections 71 to 74, respectively. For example, when first to fourth encoders 41 to 44 are absolute encoders, control device 80 may derive the current coordinate of distal end 50 based on the current encoder signals of first to fourth encoders 41 to 43. For example, in the case where first to fourth encoders 41 to 44 are incremental encoders, control device 80 may grasp the current coordinate by performing processing of moving distal end 50 to a predetermined initial position whose coordinate is known without using any encoder signal. The predetermined initial position may be, for example, a position in which each of first to fourth rotation mechanisms 21 to 24 is in the state of being rotated to an upper limit position or a lower limit position in a rotatable range (rotation angle), or may be, for example, a position in which a predetermined mark disposed on base 101 is detected using imaging device 60.

When control device 80 outputs the processing condition, that is, the setting values in step S100, each of first to fourth comparison sections 71 to 74 of determination section 70 stores the input setting value (step S200), and determination section 70 determines whether the processing condition represented by the stored setting values is satisfied (step S220). Meanwhile, after step S100, control device 80 controls first to fourth motors 31 to 34 to start the processing of moving distal end 50 to the predetermined coordinate (step S110), and determines whether the processing condition has been met based on the encoder signals from first to fourth encoders 41 to 44 (step S120). As described above, in the present embodiment, control device 80 and determination section 70 each received the encoder signals from first to fourth encoders 41 to 44 in parallel, thereby determining whether the same processing condition is satisfied. The determination of whether the processing condition is satisfied by control device 80 may be performed by counting the number of pulses of the received encoder signal and comparing it with the set value, in the same manner as determination section 70. Alternatively, control device 80 may determine whether the processing condition is satisfied by determining whether the current coordinate of distal end 50 has reached the predetermined coordinate based on the received encoder signals and the position correspondence information.

Control device 80 continues the control of first to fourth motors 31 to 34 until it is determined in step S120 that the processing condition is satisfied, and if it is determined that the processing condition is satisfied, performs a motor-control clock-starting process for starting the clocking (step S130). When the clocking is started, each time a pulse is received from at least one of first to fourth encoders 41 to 44, that is, each time the coordinate of distal end 50 change, control device 80 associates the coordinate of distal end 50 at that time with the time (e.g., elapsed time from the start of the clocking) and sequentially stores the coordinate and the time as coordinate-time association information. On the other hand, in imaging device 60, imaging control section 63 waits until determination section 70 determines in step S220 that the processing condition is satisfied, and when it is determined that the processing condition is satisfied, that is, when a signal, indicating of the processing condition being satisfied, is received from determination combining section 75, predetermined imaging-related processing related to image capturing of imaging section 62 is performed (step S230). In the present embodiment, the imaging-related processing includes an imaging-control clock-starting process for starting clocking and an imaging command processing for instructing imaging section 62 to start imaging of an image. When the imaging command processing is received, imaging section 62 starts continuous imaging at a predetermined frame rate (for example, 1,000 fps), and sequentially outputs the generated images to imaging control section 63. As described above, in the present embodiment, since control device 80 and imaging control section 63 each start the clocking based on the same processing condition, both start the clocking at substantially the same timing. Further, imaging section 62 starts multiple image-capturing when the processing condition is satisfied, that is, when distal end 50 reaches the predetermined coordinate.

After step S230, imaging control section 63 starts outputting the captured image to control device 80 (step S240). When the image captured by imaging section 62 is received, imaging control section 63 adds time information (time stamp) to the image and sequentially outputs the image and the time information to control device 80. The time information is information representing a time based on the clocking started in step S230 (for example, an elapsed time from the time at which step S230 is performed to the time at which the image is input).

On the other hand, control device 80 controls first to fourth motors 31 to 34 based on the image and the time information attached to the image received from the imaging device 60, and moves collecting member 53 toward bolt 106 in order to collect bolt 106 (step S140). Then, it is determined whether bolt 106 is ready to be collected based on the received image (step S150), and if bolt 106 is not ready to be collected, the processing in step S140 and subsequent steps is executed. The processing of step S140 is performed, for example, as follows. First, control device 80 recognizes bolt 106 in the image initially received from imaging device 60. The recognition of bolt 106 can be accomplished, for example, by distinguishing between the area of bolt 106 in the image and other region (e.g., region of pallet 105) by binarization processing, pattern matching processing, or the like, and recognizing a region that conforms to the reference shape data of bolt 106 prepared in advance. Next, among one or more recognized bolts 106, first bolt 106 that can be distinguished from second bolts 106, such as bolt 106 positioned at the leftmost front of pallet 105, is determined as a collection target. Subsequently, in the image secondly received from imaging device 60, the same bolt as bolt 106 determined as the collection target is recognized in the same manner. Based on the first received image and the second received image, the coordinate, the moving speed, the moving direction, and the like of bolt 106 as a collection target are estimated. For example, the coordinate of distal end 50 corresponding to the time at which the first received image was captured is derived based on the time information of the first received image and the coordinate-time association information, and the coordinate of bolt 106 as a collection target at the time at which the image was captured are estimated based on the derived coordinate, the position and size of bolt 106 as a collection target recognized in the image, and the like. Based on the second received image and the time information, the coordinate of bolt 106 as a collection target at the time at which the image was captured are estimated in the same manner. Then, the moving speed and the moving direction of bolt 106 are estimated based on the time interval between the capturing of the two images and the estimated coordinate. When the coordinate, the moving speed, and the moving direction of bolt 106 as a collection target are estimated in this manner, first to fourth motors 31 to 34 are controlled so that the bolt 106 as a collection target and collecting member 53 approach each other by tracking bolt 106 as a collection target which is moving, i.e., being conveyed by conveyance device 102, in consideration of, for example, the moving speed of distal end 50 due to the operation of first to fourth motors 31 to 34. This processing of step S140 is repeated until it is determined in step S150 that bolt 106 is ready to be collected. Since images are sequentially output from imaging device 60, as the image used in the processing of step S140, multiple (for example, two) latest images may be used each time the processing is performed. In this manner, control device 80 derives the coordinate of the distal end 50 when the image is captured based on the time information and the coordinate-time association information attached to the image, estimates the coordinate, the moving speed and the moving direction of bolt 106 as a collection target based on the derived coordinate of distal end 50 and the image, and controls first to fourth motors 31 to 34 so as to collect bolt 106 being moved.

When it is determined in step S150 that bolt 106 as a collection target can be collected, control device 80 controls collecting member 53 to collect bolt 106 (step S160), and outputs an imaging stop command to imaging control section 63 (step S170). When the imaging stop command is received, imaging control section 63 controls imaging section 62 to stop capturing of an image (step S270). On the other hand, control device 80 controls first to fourth motors 31 to 34, thereby moving collected bolt 106 from pallet 105 to a not-shown predetermined position (step S180). In step S180, bolt 106 may be placed on a conveyor of another conveyance device (not shown) or attached to a component to be conveyed by another conveyance device (not shown). For example, when the number of bolts 106 to be moved from pallet 105 is determined, the processing shown in FIG. 4 may be repeated until the determined number of bolts 106 is moved. In this case, in the second and subsequent processing, since each of first to fourth comparison sections 71 to 74 has already stored the set value, control device 80 may omit step S100.

Here, the correspondence relationship between the constituent elements of the present embodiment and the constituent elements of the present invention will be clarified. Imaging section 62, determination section 70, and imaging control section 63 of the present embodiment correspond to an imaging section, a determination section, and an imaging control section of the present invention, respectively. Imaging device 60 corresponds to a motor control device of the present invention, and a system including control device 80 and imaging device 60 corresponds to an imaging system of the present invention.

In work execution system 100 of the present embodiment described above, imaging device 60 receives encoder signals, and performs the imaging-related processing based on the multiple received encoder signals. Therefore, as compared with the case where the execution command of the imaging-related processing is received from control device 80 to which the encoder signal is input, for example, the delay time from the time when the processing condition is satisfied (from the time when distal end 50 reaches the predetermined coordinate) until the imaging-related processing is performed can be reduced, and the imaging-related processing can be performed at a more appropriate timing. Work execution system 100 includes imaging device 60, and control device 80 that receives multiple encoder signals in parallel with imaging device 60, and controls first to fourth motors 31 to 34 based on the received multiple encoder signals. Therefore, each of control device 80 and imaging device 60 can perform the processing based on the encoder signal at a more appropriate timing.

The imaging-related processing includes the imaging-control-side clocking start processing for starting the clocking, and imaging control section 63 adds time information based on the clocking to the image captured by imaging section 62. Therefore, the clocking can be started at a more appropriate timing, and more appropriate time information can be added to the image. Further, when it is determined that the processing condition is satisfied based on the received multiple encoder signals, control device 80 performs the motor-control-side clocking start processing for starting the clocking. Control device 80 controls first to fourth motors 31 to 34 based on the image and the time information attached to the image received from imaging device 60. In this case, since imaging device 60 and control device 80 received the encoder signals in parallel and start the clocking based on the same processing condition, the time clocked between imaging device 60 and control device 80 can be synchronized more accurately. Therefore, imaging device 60 can add, to the image, more appropriate time information, that is, time information having a smaller deviation from the time measured by control device 80. When control device 80 controls first to fourth motors 31 to 34 based on the image and the time information attached to the image, it is possible to perform control with higher accuracy. For example, consider a case where the time difference between the clocking of imaging device 60 and the clocking of control device 80 is large. In this case, in step S140 of FIG. 4 described above, even if control device 80 derives the coordinate of distal end 50 at the time of image capturing based on the time information added to the image and the coordinate-time association information, the deviation between the time information added to the image and the time information included in the coordinate-time association information is large. Therefore, the coordinate of distal end 50 at the time of image capturing cannot be accurately derived, and as a result, collecting member 53 cannot be appropriately moved to bolt 106 as a collection target in some cases. Such a problem can be suppressed by precisely synchronizing the time between imaging device 60 and control device 80.

Further, an imaging-related processing may include the imaging command processing for causing the imaging section to capture the image. By doing so, it is possible to perform image capturing at a more appropriate timing. In the present embodiment, when distal end 50 reaches the predetermined coordinate suitable for starting image capturing, image capturing of multiple images can be started.

Furthermore, control device 80 outputs the processing condition to imaging device 60, and determination section 70 determines whether the processing condition is satisfied based on the processing condition received from control device 80. Therefore, control device 80 can set the processing condition used in imaging device 60 in advance.

The present invention is not limited in any way to the above-mentioned embodiments, and it is needless to say that the present invention can be implemented in various forms as long as it belongs to the technical scope of the present invention.

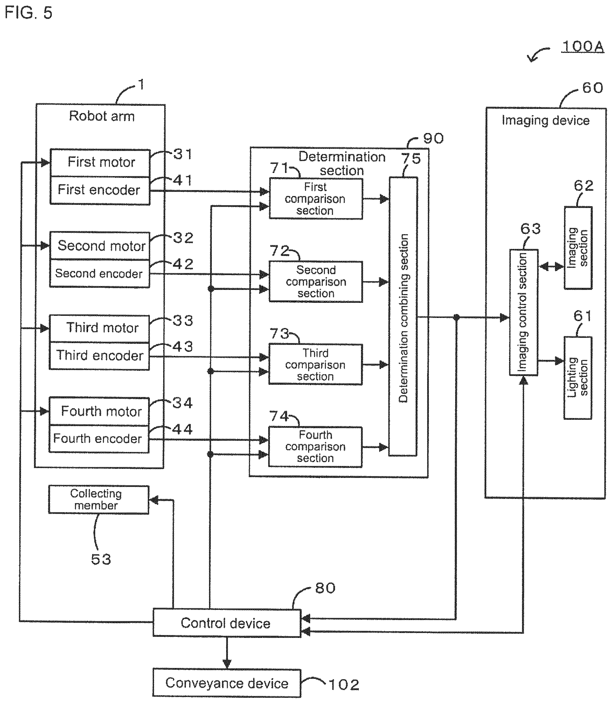

For example, in the embodiment described above, although multiple encoder signals are input in parallel to control device 80 and to imaging device 60, the configuration is not limited to this. For example, control device 80 and imaging device 60 may receive information from the determination device which performs determination based on multiple encoder signals, in parallel. FIG. 5 is a block diagram showing an electrical connection relationship in work execution system 100A of an alternative embodiment in this case. Work execution system 100A of this example includes determination device 90 independent of imaging device 60, instead of providing determination section 70 in imaging device 60. Determination device 90 is a device for receiving encoder signals of first to fourth motors 31 to 34 and determining whether predetermined processing condition is satisfied on the basis of multiple received encoder signals, and includes first to fourth comparison sections 71 to 74 and determination combining section 75, similarly to determination section 70. Imaging control section 63 and control device 80 are connected in parallel with each other to determination combining section 75, and each can receive information indicating that the processing condition is satisfied from determination combining section 75. In addition, control device 80 outputs the processing condition to first to fourth comparison sections 71 to 74 of determination device 90. In the work execution system 100 A, the determination device 90 performs the processing of steps S200 and S220 in FIG. 4. When information indicating that the processing condition is satisfied is received from determination device 90, control device 80 performs the motor-control-side clocking start processing in step S130. Similarly, when the information, indicating the processing condition being satisfied, is received from determination device 90, imaging control section 63 performs the imaging-related processing in step S230, (for example, the imaging-control-side clocking start processing and the imaging command processing). As described above, in work execution system 100A of the modification example, imaging device 60 and control device 80 receive in parallel, from determination device 90, information indicating that the processing condition is satisfied based on multiple encoder signals, thereby starting the clocking. Therefore, similarly to the embodiment described above, it is possible to synchronize the time clocked between imaging device 60 and control device 80 with higher accuracy, and control device 80 can control first to fourth motors 31 to 34 with higher accuracy.

In the embodiment described above, although first to fourth comparison sections 71 to 74 store the processing condition received from control device 80, that is, the respective set values, the configuration is not limited thereto. For example, first to fourth comparison sections 71 to 74 may store the set values in advance, and the output of the processing condition from control device 80 may be omitted.

In the embodiment described above, the imaging-related processing executed by imaging control section 63 when the processing condition is satisfied includes the imaging-control-side clocking start processing and the imaging command processing, but the configuration is not limited thereto. For example, the imaging-related processing may include at least one of the imaging-control-side clocking start processing and the imaging command processing, or may include none of these processing and include any other processing. For example, the imaging-related processing executed when the processing condition is satisfied may include the imaging-control-side clocking start processing and may not include the imaging command processing. Also, in this case, it is possible to synchronize the time measured between imaging device 60 and control device 80 with higher accuracy. In this case, imaging control section 63 may perform the imaging command processing at any timing, for example, before or after the processing condition is satisfied. Imaging device 60 may include a determination section that determines whether a processing condition that triggers the imaging-control-side clocking start processing is satisfied, and a determination section that determines whether the processing condition that triggers the imaging command processing is satisfied. However, as in the above-described embodiment, it is preferable to determine the processing condition that triggers both of the imaging-control-side clocking start processing and the imaging command processing by one determination section 70, that is, to make the determination section common, because the number of components can be reduced.

In the embodiment described above, the imaging command processing executed when the processing condition is satisfied is processing for causing imaging section 62 to start capturing multiple images, but the configuration is not limited thereto. For example, the imaging command processing may be processing for causing imaging section 62 to capture an image. Also, in this case, it is possible to capture an image when the processing condition is satisfied, that is, when distal end 50 reaches the predetermined coordinate. In this case, control device 80 may update the processing condition every time one image is captured. This makes it possible to capture an image when distal end 50 is positioned at each of multiple coordinates in accordance with respective processing conditions.

In the embodiment described above, control device 80 may perform the motor-control-side clocking start processing of step S130 in consideration of the delay time from the time when the processing condition is satisfied until the time when imaging device 60 performs the imaging-related processing. For example, the delay time from the time when the processing condition is satisfied (from the time when distal end 50 reaches the predetermined coordinate) until the time when determination combining section 75 outputs a signal indicating that the processing condition is satisfied, and the delay time until imaging control section 63 further starts the clocking may be considered. For example, based on the difference between the delay time (T1) on the side of imaging device 60 and the delay time (T2) on the side of control device 80 described above, when T1 >T2, control device 80 may start the clocking in step S130 after the elapse of the time (T1-T2) after determining that the processing condition is satisfied in step S120. Alternatively, when T1 < T2, control device 80 may start the clocking from the time (T2-T1) when it is determined in step S120 that the processing condition is satisfied.

In the embodiment described above, as an example of the time information to be added to the image by imaging control section 63 in step S240, information indicating the elapsed time from the start of clocking in step S230 to the input time of the image has been described, but the configuration is not limited thereto. For example, the imaging control section 63 may add the corrected time information to the image in consideration of the delay time from the time when the image capturing section 62 captures the image to the time when the imaging control section 63 adds the time information to the image. Specifically, for example, the delay time may be a time required after imaging section 62 captures an image (for example, from the timing at which the imaging element receives light) until the image is generated and imaging control section 63 receives the image and adds time information. Imaging control section 63 may add, to the image, time information representing a time (elapsed time after correction) obtained by subtracting the delay time from the elapsed time from the start of the clocking to the input time of the image. The delay time, for example, may be a measured value derived for each image based on the number of clocks, or may be a fixed value set in advance. Further, control device 80 may perform the processing in consideration of the delay time. For example, in step S140, control device 80 may perform the processing based on the time (time after correction) obtained by subtracting the delay time from the time represented by the time information added to the image.

In the embodiment described above, the processing condition is a condition that distal end 50 can be considered to exist at the predetermined coordinate, but the predetermined coordinate may be one coordinate or may be an aggregate of multiple coordinates. For example, the processing condition may be a condition that distal end 50 is considered to be present in a predetermined region.

In the embodiment described above, robotic arm 1 is a multi-axis robot configured as a vertical articulated robot, but the robotic arm is only needed to be a multi-axis robot having multiple drive shafts. For example, robot arm 1 may be a horizontal articulated robot or an orthogonal robot.

In the embodiment described above, the encoder signals of all the motors included in robot arm 1 are input to determination section 70 and control device 80, but the configuration is not limited thereto. Determination section 70 and control device 80 may receive two or more encoder signals of the multiple motors included in robot arm 1.

In the embodiment described above, imaging device 60 is disposed at distal end 50 of robot arm 1, but the configuration is not limited thereto. For example, imaging device 60 may be fixedly disposed at a position where collecting member 53 of robot arm 1 can capture an image of a collection target.

In the embodiment described above, the case where control device 80 controls robot arm 1 to move bolt 106 serving as a workpiece has been described, but the configuration is not limited thereto. For example, control device 80 may control robot arm 1 so that imaging device 60 moves close to a workpiece and performs image capturing, and may perform an appearance inspection of the workpiece based on the captured image.

In the embodiment described above, work execution system 100 including robot arm 1, imaging device 60, and control device 80 has been described, but for example, the imaging system may include control device 80 and imaging device 60 connected to robot arm 1, or may include only imaging device 60 connected to robot arm 1.

### Industrial Applicability

The present invention can be applied to the technical field of a device which performs processing such as collection and inspection of a workpiece such as a bolt.

### Reference Signs List

1: robot arm; 11: first arm; 12: second arm, 13: third support section, 14: pedestal, 21 to 24: first to fourth rotation mechanisms, 31 to 34: first to fourth motors, 41 to 44: first to fourth encoders; 50: distal end; 52: mounting section; 53: collecting member; 60: imaging device; 61: lighting section; 62: imaging section; 63: imaging control section; 70: determination section; 71 to 74: first to fourth comparison sections; 75: determination combining section; 80: control device; 90: determination device; 100: work execution system; 100A: work execution system; 101: base; 102: conveyance device; 105: pallet; 106: bolt

## Claims

1. An imaging device comprising:
an imaging section configured to capture an image;
a determination section configured to receive an encoder signal of each of multiple motors included in a multi-axis robot and determine whether a predetermined processing condition is satisfied based on the related encoder signals, and
an imaging control section configured to perform predetermined imaging-related processing related to image capturing by the imaging section when the determination section determines that the processing condition is satisfied.

2. The imaging device according to claim 1,
wherein the imaging-related processing includes imaging-control-side clocking start processing for starting clocking, and
wherein the imaging control section adds time information based on the clocking to the image captured by the imaging section.

3. The imaging device according to claim 1 or 2, wherein the imaging-related processing includes imaging command processing for causing the imaging section to capture the image.

4. An imaging system comprising:
an imaging device according to any one of claims 1 to 3; and
a motor control device configured to receive multiple encoder signals in parallel with the imaging device and control the multiple motors based on the received multiple encoder signals.

5. The imaging system according to claim 4,
wherein the imaging-related processing includes imaging-control-side clocking start processing for starting clocking,
wherein the imaging control section adds time information based on the clocking to the image captured by the imaging section and outputs the image to the motor control device, and
wherein the motor control device performs motor-control-side clocking start processing for starting clocking when it is determined that the processing condition is satisfied based on the received multiple encoder signals, and the motor control device controls the multiple motors based on the image received from the imaging device and the time information added to the image.

6. The imaging system according to claim 4 or 5, wherein the motor control device outputs the processing condition to the imaging device, and the determination section performs the determination based on the processing condition received from the motor control device.

7. An imaging system comprising:
a determination device configured to receive an encoder signal of each of multiple motors included in a multi-axis robot and determine whether a predetermined processing condition is satisfied based on the received encoder signals;
an imaging device including an imaging section configured to capture an image, and an imaging control section configured to perform imaging-control-side clocking start processing for starting clocking when information, indicating of the processing condition being satisfied, is received from the determination device and add time information based on the clocking to the image captured by the imaging section, and
a motor control device configured to receive the information, indicating of the processing condition being satisfied, from the determination device in parallel with the imaging device, perform motor-control-side clocking start processing for starting clocking when the information is received, and control the multiple motors based on the image received from the imaging device and the time information added to the image.
